# EUROPÄISCHE PATENTSCHRIFT

(11) **EP 1 803 194 B1**
(45) Veröffentlichungstag und Bekanntmachung des Hinweises auf die Patenterteilung: **08.05.2013**
(21) Anmeldenummer: 05779410.9
(22) Anmeldetag: 08.09.2005
(51) Int. Cl.: H01R 11/26, H01R 4/20, H01R 4/62, H05B 3/08

(54) **CRIMPVERBINDUNG**
CRIMPED CONNECTION
CONNEXION REALISEE PAR SERTISSAGE

(30) Priorität: 14.10.2004 DE 102004050001
(43) Veröffentlichungstag der Anmeldung: 04.07.2007
(73) Patentinhaber: ContiTech Techno-Chemie GmbH, 61184 Karben (DE); Eugen Forschner GmbH, 784549 Spaichingen (DE)
(72) Erfinder: SCHEUERMANN, Stefan, Jürgen, D-60439 Frankfurt/Main (DE); KIRSCH, Christof, 61194 Niddatal (DE); CHALOUPKA, Thomas, 72393 Burladingen (DE)
(74) Vertreter: Finger, Karsten
(86) Internationale Anmeldenummer: PCT/EP2005/009637
(87) Internationale Veröffentlichungsnummer: WO 2006/042587

(56) Entgegenhaltungen:
- EP-A- 0 485 295
- DE-A1- 10 201 920
- US-A- 3 839 623
- US-A- 3 895 851
- US-A- 3 955 044

## Beschreibung

Die Erfindung betrifft eine Crimpverbindung zwischen dem Ende eines elektrischen Leiters aus Edelstahl und einem Verbinder, wobei das Ende des elektrischen Leiters im zusammengedrückten Verbinder angeordnet ist.

In der Elektroinstallation bezeichnet man mit Crimpen das mechanische Zusammendrücken einer Hülse zur Herstellung einer festen mechanischen Verbindung zwischen Leiter und Verbinder. Als zusammendrückbare Verbinder sind dem Fachmann diverse Typen bekannt, die je nach Einsatzbedingungen ausgewählt werden. Nur beispielhaft seien hier die so genannten Kabelschuhe und Stossverbinder genannt.

Unter einem elektrischen Leiter werden hier und im Folgenden ein oder mehrere Drähte oder ein Bündel von Litzen verstanden. Ein derartiger Leiter kann eine elektrisch isolierende Ummantelung aufweisen.

Elektrische Leiter aus Edelstahl werden beispielsweise in beheizbaren Schläuchen verwendet und dienen zur Erwärmung der in diesen Schläuchen fließenden Medien. Ein beheizbarer Schlauch mit elektrischem Heizleiter ist beispielsweise aus der DE 102 01 920 A1 bekannt, wobei sich der Heizleiter über zumindest einen Teilbereich der Schlauchlänge erstreckt. Der Heizleiter ist üblicherweise in einer Schicht des Schlauches eingebettet. Bei einem mehrschichtigen Schlauch kann der Heizleiter auch zwischen zwei Schichten angeordnet sein. Die Enden des Heizleiters sind freigelegt, um sie an eine zum Betreiben des Heizleiters erforderliche Spannungsquelle anschließen zu können. Hierzu werden die freigelegten Enden zu einer elektrischen Anschlussvorrichtung geführt und mit dieser verbunden. An die Anschlussvorrichtung kann dann eine Spannungsquelle angeschlossen werden.

Die Verbindung der Enden des Heizleiters mit der Anschlussvorrichtung erfolgt üblicherweise über die eingangs genannte Crimpverbindung.

Derartige Crimpverbindungen sollten möglichst gasdicht sein.

Bei einer gasdichten Verbindung sind Leiter und Verbinder so fest miteinander verformt und verpresst, dass keine Zwischenräume mehr vorhanden sind. Weder ein flüssiges noch ein gasförmiges Medium kann unter normaler atmosphärischer Umgebung in den Crimp eindringen. Dadurch wird eine Oxidation zwischen den verpressten Einzeldrähten unterbunden und eine Erhöhung des Crimpwiderstandes nahezu ausgeschlossen.

Eine nicht ausreichende Verpressung hat nachteilig zur Folge, dass der Leiter aus der Verbindung gezogen werden kann. Darüber hinaus bleiben aber auch Zwischenräume erhalten, in denen es zur Oxidation kommen kann. Eine Oxidation hat die Erhöhung des Übergangswiderstandes zur Folge. Ein erhöhter Widerstand ist wiederum von Nachteil für die Signalübertragung, da der Signalfluss gedämpft bzw. geschwächt wird, und für die Leistungsübertragung, da es zu einem Energieverlust und zu einer Kontakterwärmung und damit einhergehend zu einer Brandgefahr kommt.

Daher müssen die einzelnen Leiter durch einen ausreichend großen Crimpdruck eng aneinander gepresst und verformt werden, so dass eine Verpressung ohne nennenswerte Zwischenräume erreicht wird.

Es hat sich aber gezeigt, dass eine derartige Verpressung bei elektrischen Leitern aus Edelstahl, insbesondere bei den üblicherweise verwendeten Heizleitern beheizbarer Schläuche, praktisch kaum möglich ist. Heizleiter bestehen nämlich aus Werkstoffen, die äußerst zäh und hart sind und sich daher nur schwer verformen lassen. Übliche Crimpverbindungen solcher elektrischer Leiter sind daher nicht gasdicht, wodurch sich die bereits beschriebenen negativen Folgen ergeben. Diese gasundichten Crimpverbindungen lassen sich deshalb auch nur für Ströme von wenigen Ampere verwenden.

Der Erfindung liegt die Aufgabe zugrunde, eine gasdichte Crimpverbindung zwischen dem Ende eines elektrischen Leiters aus Edelstahl oder einem ähnlich harten und zähen Werkstoff und einem Verbinder bereitzustellen.

Erfindungsgemäß wird diese Aufgabe bei einer Crimpverbindung nach dem Oberbegriff des Anspruchs 1 durch die Merkmale des kennzeichnenden Teils des Anspruchs 1 gelöst. Weiterbildungen und vorteilhafte Ausgestaltungen ergeben sich aus den Unteransprüchen.

Dadurch, dass im Verbinder zusätzlich das Ende eines elektrischen Leiters aus Kupfer angeordnet ist, wird auf überraschend einfache Weise erreicht, dass die Crimpverbindung zwischen dem Ende des elektrischen Leiters aus Edelstahl oder einem ähnlich harten und zähen Werkstoff und dem Verbinder gasdicht ist.

Es hat sich nämlich gezeigt, dass sich das Ende des zusätzlich im Verbinder angeordneten elektrischen Leiters aus Kupfer beim Zusammendrücken des Verbinders derart verformt, dass die durch das Ende des elektrischen Leiters aus Edelstahl oder einem ähnlich harten und zähen Werkstoff gebildeten Zwischenräume ausgefüllt werden. Das Ende des elektrischen Leiters aus Kupfer wirk beim Zusammendrücken des Verbinders quasi als Füllmaterial.

Durch die erfindungsgemäß erhaltene gasdichte Crimpverbindung wird eine Oxidation zwischen den verpressten Einzeldrähten und/oder Litzen unterbunden und eine Erhöhung des Crimpwiderstandes nahezu ausgeschlossen.

Einer Weiterbildung der Erfindung sieht vor, dass der elektrischen Leiter aus Edelstahl ein Heizleiter eines beheizbaren Schlauches ist.

Dadurch können die Enden des Heizleiters erstmals an eine Spannungsquelle angeschlossen werden, ohne dass eine Oxidation der Crimpverbindung und eine Erhöhung des Übergangswiderstandes zu befürchten sind. Die Gefahr einer Kontakterwärmung und mithin eines Brandes wird vermieden.

Der elektrische Leiter kann aus einem oder mehreren Drähten und/oder einem Bündel von Litzen besteht. Ein Bündel von Litzen hat den Vorteil, dass sich diese bei Zusammendrücken des Verbinders bereits ohne Verformung enger aneinanderfügen und erste Zwischenräume ausfüllen. Schließlich ist nur noch eine geringe Verformung der Kupferlitzen erforderlich, um letzte Zwischenräume auszufüllen.

In einer vorteilhaften Ausgestaltung der Erfindung ist das nicht im Verbinder angeordnete Ende des aus Kupfer bestehenden elektrischen Leiters mit einer Spannungsquelle verbunden.

Da der elektrische Leiter aus Kupfer gegenüber dem elektrischen Leiter aus Edelstahl einen sehr viel geringeren Widerstand besitzt, ist es bei dieser Ausgestaltung der Erfindung möglich, den elektrischen Leiter aus Kupfer fast beliebig lang zu wählen, ohne dass ein negativer Einfluss auf den Widerstand des elektrischen Leiters aus Edelstahl zu befürchten. Handelt es sich bei dem elektrischen Leiter aus Edelstahl um einen Heizleiter, bleibt somit der Heizwiderstand unabhängig von der Länge des elektrischen Leiters aus Kupfer unverändert. Die Heizleistung wird durch den elektrischen Leiter aus Kupfer nicht beeinflusst. Der elektrische Leiter bildet vorteilhaft quasi eine Kontaktbrücke.

Weiterhin ist vorgesehen, dass der Verbinder ein Kabelschuh ist. Ein derartiger Verbinder hat sich als besonders geeignet erwiesen, um die Enden der elektrischen Leiter in seinem hülsenartigen Abschnitt derart aufzunehmen, dass dieser anschließend erfindungsgemäß gasdicht zusammendrückbar bzw. verpressbar ist.

Alternativ hierzu ist vorgesehen, dass der Verbinder ein Stossverbinder ist. Auch dieser Verbinder ist besonders geeignet, um die Enden der elektrischen Leiter von gegenüberliegenden Seiten her in seinem hülsenartigen Abschnitt derart aufzunehmen, dass dieser anschließend erfindungsgemäß gasdicht zusammendrückbar bzw. verpressbar ist.

Nachfolgend wird die Erfindung anhand zweier Ausführungsbeispiele erläutert, die in der Zeichnung dargestellt sind. In dieser zeigen:
- Fig. 1: eine schematische Darstellung der erfindungsgemäßen Crimpverbindung mit einem Kabelschuh als Verbinder
a) vor dem Zusammendrücken,
b) nach dem Zusammendrücken und
c) nach dem Zusammendrücken, und
- Fig. 2: eine schematische Darstellung der erfindungsgemäßen Crimpverbindung mit hülsenartigem Clip als Verbinder
a) vor dem Zusammendrücken,
b) nach dem Zusammendrücken und
c) nach dem Zusammendrücken.

In beiden Figuren der Zeichnung sind gleiche Teile stets mit gleichen Bezugszeichen versehen.

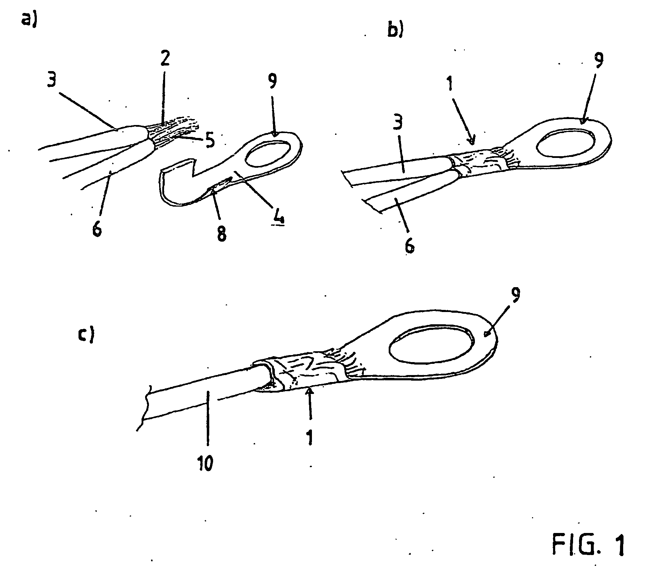

In Fig. 1 ist die erfindungsgemäßen Crimpverbindung 1 mit einem Kabelschuh als Verbinder 4 dargestellt.

Wie aus a) ersichtlich, besteht der Kabelschuh aus einem hülsenartigen Abschnitt 8 und einem ösenartigen Kontakt 9 zum Anschluss an eine hier nicht dargestellte Spannungsquelle. Die Crimpverbindung 1 umfasst neben diesem Verbinder 4 das Ende 2 des elektrischen Leiters 3 aus Edelstahl und das Ende 5 des elektrischen Leiters 6 aus Kupfer. Der elektrische Leiter 6 aus Kupfer kann relativ kurz gewählt werden. Die Enden 2, 5 bestehen aus einer Vielzahl von Litzen.

Zur Herstellung der gasdichten Crimpverbindung 1 werden die Enden 2, 5 in dem hülsenartigen Abschnitt 8 des Verbinders 4 angeordnet. Anschließend wird der hülsenartige Abschnitt 8 derart zusammengedrückt, dass sich die Litzen aus Kupfer in vorhandene Zwischenräume einformen, um diese vollständig auszufüllen.

In b) ist die entstandene gasdichte Crimpverbindung 1 nach dem Zusammendrücken dargestellt. Anschließend können die elektrischen Leiter 3, 6 noch gemeinsam ummantelt werden. Die gemeinsame Ummantelung 10 ist in c) dargestellt.

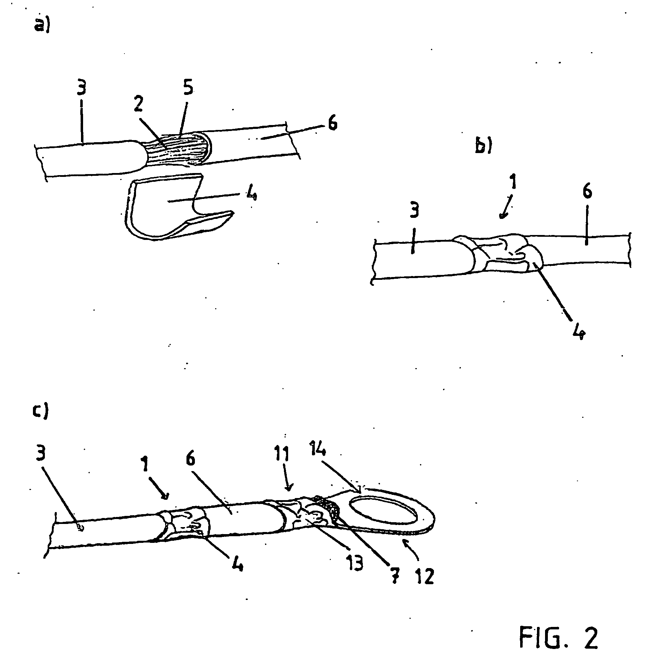

Fig. 2 zeigt die erfindungsgemäßen Crimpverbindung 1 mit einem hülsenartigen Clip nach Art eines Stossverbinders 4.

Die Crimpverbindung 1 umfasst außerdem das Ende 2 des elektrischen Leiters 3 aus Edelstahl und das Ende 5 des elektrischen Leiters 6 aus Kupfer. Der elektrische Leiter 6 aus Kupfer dient quasi als Kontaktbrücke und kann je nach Einsatzbedingungen beliebig lang gewählt werden. Die Enden 2, 5 bestehen aus einer Vielzahl von Litzen.

Zur Herstellung der gasdichten Crimpverbindung 1 werden die Enden 2, 5 in dem hülsenartigen Clip 4 angeordnet. Dazu werden die Enden 2, 5 von gegenüberliegenden Seiten her zusammengeführt, wobei sich die Litzen der Enden 2, 5 über eine vorgegeben Länge berühren, vorzugsweise untereinander vermischen. Anschließend wird der hülsenartige Clip derart zusammengedrückt, dass sich die Litzen aus Kupfer in vorhandene Zwischenräume innerhalb des Verbinders einformen, um diese vollständig auszufüllen.

In b) und c) ist die gasdichte Crimpverbindung 1 nach dem Zusammendrücken dargestellt.

Das nicht im Verbinder 4 angeordnete Ende 7 des elektrischen Leiters 6 aus Kupfer weist vorzugsweise - wie in c) dargestellt- eine weitere Crimpverbindung 11 auf. In dieser ist das Ende 7 in einem als Kabelschuh 12 ausgestalteten Verbinder positioniert. Der Kabelschuh 12 besteht aus einem hülsenartigen Abschnitt 13 und einem Kontakt 14 zum Anschluss an eine hier nicht dargestellte Spannungsquelle. Damit dient der elektrische Leiter 6 aus Kupfer quasi als Kontaktbrücke.

### Bezugszeichenliste

### (ist Bestandteil der Beschreibung)

| | |
|---|---|
| 1 | Crimpverbindung |
| 2 | Ende aus Edelstahl |
| 3 | elektrischer Leiter aus Edelstahl |
| 4 | Verbinder |
| 5 | erstes Ende aus Kupfer |
| 6 | elektrischer Leiter aus Kupfer |
| 7 | zweites Ende aus Kupfer |
| 8 | hülsenartiger Abschnitt |
| 9 | Kontakt |
| 10 | Ummantelung |
| 11 | Crimpverbindung |
| 12 | Kabelschuh |
| 13 | hülsenartiger Abschnitt |
| 14 | Kontakt |

## Patentansprüche

1. Crimpverbindung (1) zwischen dem Ende (2) eines elektrischen Leiters (3) aus Edelstahl und einem Verbinder (4), wobei das Ende (2) des elektrischen Leiters (3) im zusammengedrückten Verbinder (4) angeordnet ist, **dadurch gekennzeichnet, dass** im Verbinder (4) zusätzlich das Ende (5) eines elektrischen Leiters (6) aus Kupfer im direkten kontakts mit dem elektrischen Leiter aus Edelstahl angeordnet ist.

2. Crimpverbindung (1) nach Anspruch 1, **dadurch gekennzeichnet, dass** der elektrischen Leiter (3) aus Edelstahl ein Heizleiter eines beheizbaren Schlauches ist.

3. Crimpverbindung (1) nach Anspruch 1 oder 2, **dadurch gekennzeichnet, dass** der elektrische Leiter (3, 6) aus einem oder mehreren Drähten und/oder einem Bündel von Litzen besteht.

4. Crimpverbindung (1) nach einem der Ansprüche 1 bis 3, **dadurch gekennzeichnet, dass** das nicht im Verbinder (4) angeordnete Ende (7) des elektrischen Leiters (6) aus Kupfer mit einer Spannungsquelle verbunden ist.

5. Crimpverbindung (1) nach einem der Ansprüche 1 bis 4, **dadurch gekennzeichnet, dass** der Verbinder (4) ein Kabelschuh ist.

6. Crimpverbindung nach einem der Ansprüche 1 bis 4, **dadurch gekennzeichnet, dass** der Verbinder (4) ein Stossverbinder ist.

## Claims

1. Crimped connection (1) between the end (2) of an electrical conductor (3) of high-grade steel and a connector (4), the end (2) of the electrical conductor (3) being arranged in the compressed connector (4), **characterized in that** the end (5) of an electrical conductor (6) of copper is additionally arranged in direct contact with the electrical conductor of high-grade steel in the connector (4).

2. Crimped connection (1) according to Claim 1, **characterized in that** the electrical conductor (3) of high-grade steel is a heating conductor of a heatable tube.

3. Crimped connection (1) according to Claim 1 or 2, **characterized in that** the electrical conductor (3, 6) comprises one or more wires and/or a bundle of stranded wires.

4. Crimped connection (1) according to one of Claims 1 to 3, **characterized in that** the end (7) of the electrical conductor (6) of copper that is not arranged in the connector (4) is connected to a voltage source.

5. Crimped connection (1) according to one of Claims 1 to 4, **characterized in that** the connector (4) is a cable lug.

6. Crimped connection according to one of Claims 1 to 4, **characterized in that** the connector (4) is a butt connector.

## Revendications

1. Connexion par sertissage (1) entre l'extrémité (2) d'un conducteur électrique (3) en acier noble et un connecteur (4), l'extrémité (2) du conducteur électrique (3) étant disposée dans le connecteur comprimé (4), **caractérisée en ce que** dans le connecteur (4) est en outre disposée l'extrémité (5) d'un conducteur électrique (6) en cuivre en contact direct avec le conducteur électrique en acier noble.

2. Connexion par sertissage (1) selon la revendication 1, **caractérisée en ce que** le conducteur électrique (3) en acier noble est un conducteur chauffant d'un tuyau flexible chauffant.

3. Connexion par sertissage (1) selon la revendication 1 ou 2, **caractérisée en ce que** le conducteur électrique (3,6) se compose d'un ou plusieurs fils métalliques et/ou d'un faisceau de torons.

4. Connexion par sertissage (1) selon l'une quelconque des revendications 1 à 3, **caractérisée en ce que** l'extrémité (7) du conducteur électrique (6) en cuivre non disposée dans le connecteur (4) est connectée à une source de tension.

5. Connexion par sertissage (1) selon l'une quelconque des revendications 1 à 4, **caractérisée en ce que** le connecteur (4) est une cosse de câble.

6. Connexion par sertissage (1) selon l'une quelconque des revendications 1 à 4, **caractérisée en ce que** le connecteur (4) est un connecteur de bout.
